# EUROPEAN PATENT APPLICATION

(11) **EP 3 373 223 A1**
(43) Date of publication of application: **12.09.2018**
(21) Application number: 18157063.1
(22) Date of filing: 16.02.2018
(51) Int. Cl.: G06Q 20/20, G07G 5/00, G06Q 20/04

(54) **HAND-HELD ELECTRONIC RECEIPT GENERATING TERMINAL**

(30) Priority: 06.03.2017 JP 2017041914
(71) Applicant: Toshiba TEC Kabushiki Kaisha, Tokyo 141-8562 (JP)
(72) Inventor: KAMAMOTO, Shunichiro, Shinagawa-ku,, Tokyo 141-8562 (JP)
(74) Representative: Takeuchi, Maya

(57) **Abstract**

A hand-held electronic receipt generating terminal in communication with a first server that is in communication with a second server includes a display device, a wireless communication interface, and a processor. The processor is programmed to generate a sequence of graphical user interfaces (GUIs) for display by the display device, based on data transmitted to and received from the first server through the wireless communication interface. The data received from the first server is generated by the first server based on data exchanged between first and second servers. The data transmitted to the first server includes first data generated based on inputs made to a first GUI (a login GUI) and second data generated based on inputs made to a second GUI containing a list of selectable objects, and an electronic receipt is generated by the first server for storage at the second server based on the second data.

## Description

### FIELD

Embodiments described herein relate generally to an electronic receipt system, and more particularly to a hand-held electronic receipt generating terminal, a server and a method for managing transaction data.

### BACKGROUND

In a case where a plurality of customers share payment obligations for a plurality of items which become a target of one transaction, one of the customers may receive cash from the other customers for a portion of the payment. The customer who receives the cash may make a single payment for all of the plurality of items.

For example, a representative of a plurality of customers belonging to one group receives money for food from each person in the group in, for example, a restaurant. Typically, the payment to the restaurant is then made by the representative.

In such a case, even if a customer other than the customer who pays is a member of an electronic receipt service, information regarding the payment by the customer cannot be confirmed afterwards by using the electronic receipt service. In addition, in a case where the customer who pays is a member of the electronic receipt service, it is possible to confirm the payment afterwards by using the electronic receipt service. However, the confirmation information also includes information regarding payment made by other customers, without distinction, and does not correctly indicate the actual payment (i.e., the amount paid after subtracting payments received from the other customers in the group) made customer who pays.

### SUMMARY OF INVENTION

To solve the above-cited problems, there is provided a hand-held electronic receipt generating terminal in communication with a first server that is in communication with a second server, comprising:
a display device;
a wireless communication interface; and
a processor programmed to generate a sequence of graphical user interfaces (GUIs) for display by the display device, based on data transmitted to the first server through the wireless communication interface and data received from the first server through the wireless communication interface, which is generated by the first server based on data exchanged between first and second servers,
wherein the data transmitted to the first server includes first data generated based on inputs made to a first GUI, which is a login GUI, and second data generated based on inputs made to a second GUI containing a list of selectable objects, and
wherein an electronic receipt is generated by the first server for storage at the second server based on the second data.

In an exemplary embodiment, there is also provided a server for managing transaction data, comprising:
a storage device that stores a plurality of order reception data records, each order reception data record corresponding to one or more items in a single transaction;
a communication interface; and
a processor configured to:
   receive, via the communication interface from a requesting terminal, a request to designate a specific payer of at least one item out of the one or more items in one single transaction,
   in response to the request, transmit, via the communication interface to the requesting terminal, setting screen data for displaying a setting screen that accepts a designation input of the user of the requesting terminal as a payer for any designated one of the one or more items in the single transaction that have not been designated,
   receive payer designation information corresponding to the designation input,
   receive payment information indicating settlement of the single transaction,
   update the order reception data record corresponding to the one single transaction based on the payer designation information to indicate the user as the payer for the designated item and based on the payment information, and
   transmit, via the communication interface to a receipt server, the updated order reception data record.

In the embodiment the processor preferably may further be configured to:
generate and store in the storage device a payer data record corresponding to each designated payer that indicates each one of the one or more items in the single transaction designated by the corresponding designated payer but does not include items in the single transaction not designated by that designated payer, and
transmit, via the communication interface to the receipt server, the generated payer data record.

In the embodiment the setting screen preferably may include a list of each of the one or more items in the single transaction.

In the embodiment the setting screen preferably may further accept an input of payment amount different than a total amount for each designated item in the single transaction.

In the embodiment the list in the setting screen preferably may indicate which of the one or more items in the single transaction have been designated by a different user.

In the embodiment the setting screen preferably may include a total amount due for each one of the one or more items in the single transaction designated by the corresponding designated payer.

In the embodiment the processor preferably may further be configured to:
generate and transmit, via the communication interface to the requesting terminal, log-in screen data for displaying a log-in screen that accepts log-in input from the user of the requesting terminal,
determine whether the user of the requesting terminal is a registered user based on whether proper log-in input is received.

Preferably in the embodiment if the user of the requesting terminal is determined to be a registered user, the processor may use an existing payer identification corresponding to the user of the requesting terminal to update the order reception data record.

Preferably in the embodiment if the user of the requesting terminal is determined not to be the registered user, the processor assigns an arbitrary payer identification as corresponding to the user of the requesting terminal to update the order reception data record.

In yet another exemplary embodiment there is also provided a method of managing transaction data comprising:
storing a plurality of order reception data records, each order reception data record corresponding to one or more items in a single transaction;
receiving, from a requesting terminal, a request to designate a specific payer of at least one item out of the one or more items in one single transaction;
in response to the request, transmitting, to the requesting terminal, setting screen data for displaying a setting screen that accepts a designation input of the user of the requesting terminal as a payer for any designated one of the one or more items in the single transaction that have not been designated;
receiving payer designation information corresponding to the designation input;
receiving payment information indicating settlement of the single transaction;
updating the order reception data record corresponding to the one single transaction based on the payer designation information to indicate the user as the payer for the designated item and based on the payment information; and
transmitting, to a receipt server, the updated order reception data record.

The method according to the embodiment preferably may further comprise:
generating information for displaying access information that indicates the receiving destination of the request; and
providing the access information to the requesting terminal, wherein the requesting terminal transmits the request based on the provided access information.

In the embodiment providing the access information preferably may include printing a code indicating a URL of a server on a slip provided to the user.

In the embodiment providing the access information preferably may include displaying a code indicating a URL of a server on a display device positioned near the user.

Preferably the method according to the embodiment may further comprise:
generating and storing a payer data record corresponding to each designated payer that indicates each one of the one or more items in the single transaction designated by the corresponding designated payer but does not include items in the single transaction not designated by that designated payer; and
transmitting, to the receipt server, the generated payer data record.

In the embodiment the setting screen preferably may include a list of each of the one or more items in the single transaction.

In the embodiment the setting screen preferably may further accept an input of payment amount different than a total amount for each designated item in the single transaction.

In the embodiment the list in the setting screen preferably may indicate which of the one or more items in the single transaction have been designated by a different user.

Preferably the method according to the embodiment may further comprise:
generating and transmitting, to the requesting terminal, log-in screen data for displaying a log-in screen that accepts log-in input from the user of the requesting terminal; and
determining whether the user of the requesting terminal is a registered user based on whether proper log-in input is received.

Preferably in the embodiment,
if the user of the requesting terminal is determined to be a registered user, the processor may use an existing payer identification corresponding to the user of the requesting terminal to update the order reception data record, and
if the user of the requesting terminal is determined not to be the registered user, the processor may assign an arbitrary payer identification as corresponding to the user of the requesting terminal to update the order reception data record.

### DESCRIPTION OF THE DRAWINGS

The above and other objects, features and advantages of the present invention will be made apparent from the following description of the preferred embodiments, given as non-limiting examples, with reference to the accompanying drawings, in which:
FIG. 1 is a diagram illustrating a schematic configuration of a sales data management system according to one embodiment.
FIG. 2 is a block diagram illustrating an example configuration of a web server.
FIG. 3 is a block diagram illustrating an example configuration of a receipt server.
FIG. 4 is a diagram schematically illustrating an example of order reception data.
FIG. 5 is a flowchart illustrating a sequence of operations according to an embodiment.
FIG. 6 is a flowchart illustrating another sequence of operations according to an embodiment.
FIG. 7 is a diagram illustrating an example setting screen.
FIG. 8 is a diagram schematically illustrating another example of the order reception data.
FIG. 9 is a diagram illustrating another example of the setting screen.
FIG. 10 is a diagram schematically illustrating another example of the order reception data.
FIG. 11 is a diagram illustrating another example of the setting screen.
FIG. 12 is a diagram schematically illustrating another example of the order reception data.
FIG. 13 is a diagram illustrating another example of the setting screen as an example.
FIG. 14 is a flowchart illustrating another sequence of operations according to an embodiment.
FIG. 15 is a diagram schematically illustrating an example of payer-by-payer data.
FIG. 16 is a flowchart illustrating another sequence of operations according to an embodiment.

### DETAILED DESCRIPTION

Embodiments provide a server for managing transaction data by which a member of an electronic receipt service can confirm a payment made by the member himself/herself with respect to a transaction which was collectively settled by a group of a plurality of payers.

A hand-held electronic receipt generating terminal according to an embodiment is in communication with a first server that is in communication with a second server. The hand-held electronic receipt generating terminal includes a display device, a wireless communication interface, and a processor. The processor is programmed to generate a sequence of graphical user interfaces (GUIs) for display by the display device, based on data transmitted to and received from the first server through the wireless communication interface. The data received from the first server is generated by the first server based on data exchanged between first and second servers. The data transmitted to the first server includes first data generated based on inputs made to a first GUI (a login GUI) and second data generated based on inputs made to a second GUI containing a list of selectable objects, and an electronic receipt is generated by the first server for storage at the second server based on the second data.

Hereinafter, an embodiment will be described with reference to the drawings. In the present embodiment, an electronic receipt system is used with a sales data management system for a transaction settlement at a restaurant that provides food service according to a customer's order will be described.

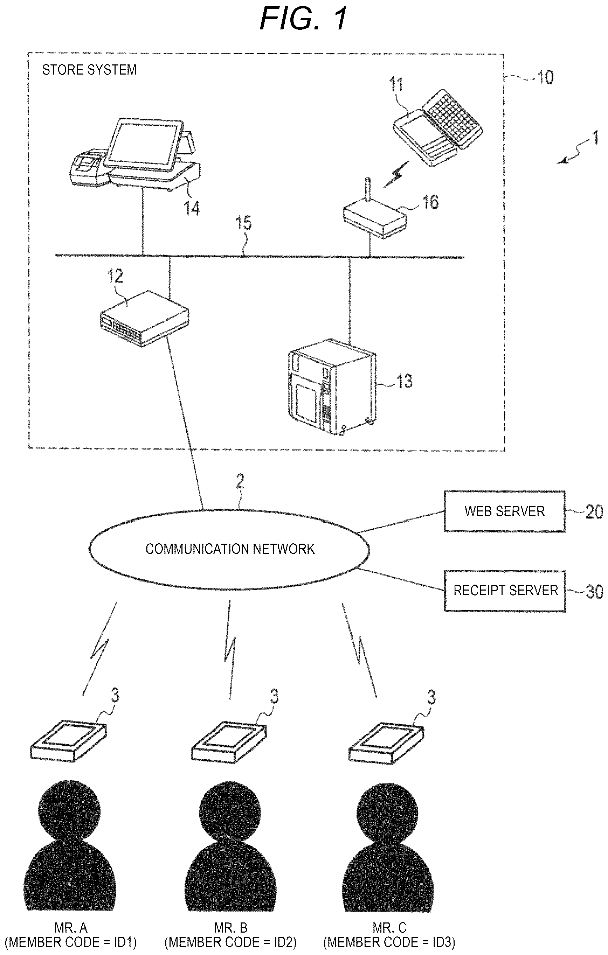

FIG. 1 is a diagram illustrating a schematic configuration of a sales data management system 1 according to the embodiment.

The sales data management system 1 includes a store system 10, a web server 20, and a receipt server 30.

The store system 10 is provided in the above-described restaurant. The store system 10 includes a hand-held terminal 11, a station 12, a printer 13, and a POS terminal 14, each connected to a local area network (LAN) 15. The hand-held terminal 11 is connected to the LAN 15 via a wireless access point 16. The hand-held terminal 11, the printer 13, the POS terminal 14, and the wireless access point 16 are illustrated as only single devices in FIG. 1, but each may be plural, and the number of devices is arbitrary for each.

The hand-held terminal 11 is a terminal device for receiving an input from a store clerk for inputting an order. The hand-held terminal 11 wirelessly transmits an item number corresponding to an ordered commodity in accordance with an input operation. An order number wirelessly transmitted from the hand-held terminal 11 is transmitted to the station 12 via the wireless access point 16 and the LAN 15.

The station 12 is installed in, for example, a management office of a restaurant. The station 12 collects the order number transmitted from the hand-held terminal 11, generates order reception data for each group of customers, and manages the order reception data. The station 12 transmits the order reception data to the web server 20 via the communication network 2. The station 12 also transmits electronic receipt data including the received order reception data to the receipt server 30 via the communication network 2, if a transaction settlement relating the order reception data is performed by the POS terminal 14.

The printer 13 receives order contents and prints an order slip for customers to bring to a checkout counter for settlement. The printer 13 may also print an order slip for notifying a cook of the order contents.

The POS terminal 14 is installed in, for example, a checkout counter of a restaurant, and performs processing for settling the transaction relating to food service provided to a customer, based on order reception data managed by the station 12.

The web server 20 receives customer setting relating to payment sharing which will be described below, and generates payer-by-payer data. The web server 20 transmits the payer-by-payer data to the receipt server 30 via the communication network 2.

The receipt server 30 accumulates various types of data included in the electronic receipt data transmitted from the station 12 and the payer-by-payer data transmitted from the web server 20. The receipt server 30 provides the electronic receipt service to members, based on the accumulated data, so that the member can confirm afterwards details of the payment made by the member at the restaurant.

A customer of the restaurant accesses the web server 20 via the communication network 2 by using the customer's own information terminal 3, and makes settings relating to the above-described payment sharing. In addition, if the customer is a member of the electronic receipt service, the customer accesses the receipt server 30 via the communication network 2 by using the information terminal 3 and can use the electronic receipt service. Typically, the information terminal 3 is a smartphone, a tablet terminal or the like, but may be any device as long as the device can access the web server 20 and the receipt server 30 via the communication network 2. Separate information terminals 3 may be used for accessing the web server 20 and accessing the receipt server 30, respectively.

The communication network 2 enables various types of communication as described above. The communication network 2 is typically a combination of a mobile communication network and the Internet. However, the communication network 2 may be any suitable network and combination thereof, such as a combination of, for example, a wireless LAN and a virtual private network (VPN).

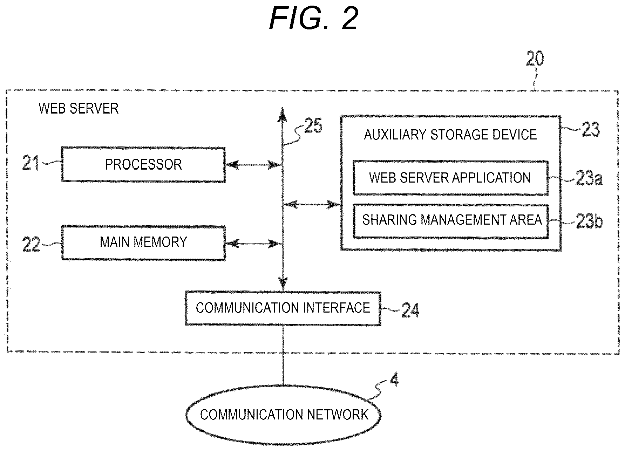

FIG. 2 is a block diagram illustrating an example configuration of the web server 20.

The web server 20 includes a processor 21, a main memory 22, an auxiliary storage device 23, a communication interface 24, and a bus 25.

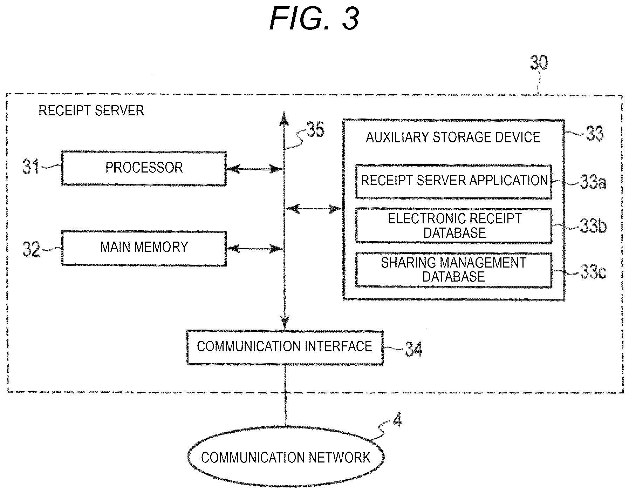

FIG. 3 is a block diagram illustrating an example configuration of the receipt server 30.

The receipt server 30 includes a processor 31, a main memory 32, an auxiliary storage device 33, a communication interface 34, and a bus 35.

That is, both the web server 20 and the receipt server 30 can each be realized by using, for example, a general-purpose server device which includes the components as hardware.

In the web server 20, the processor 21, the main memory 22, and the auxiliary storage device 23 are connected to each other through the bus 25. In the receipt server 30, the processor 31, the main memory 32, and the auxiliary storage device 33 are connected to each other through a bus 35.

The processors 21 and 31 correspond to a central processor of the corresponding computer (server). The processors 21 and 31 control each unit to realize various functions of the web server 20 or the receipt server 30, according to an operating system and an application program.

The main memories 22 and 32 correspond to a main memory of the computer. The main memories 22 and 32 include a nonvolatile memory area and a volatile memory area. The main memories 22 and 32 store the operating system and the application programs in the nonvolatile memory area. In addition, the main memories 22 and 32 may store data necessary for the processors 21 and 31 to execute various types of information processing in a nonvolatile or volatile memory area. The main memories 22 and 32 use the volatile memory area as a work area where data is appropriately rewritten by the processors 21 and 31.

The auxiliary storage devices 23 and 33 correspond to an auxiliary storage of the computer. The auxiliary storage devices 23 and 33 are, for example, an electric erasable programmable read-only memory (EEPROM), a hard disc drive (HDD), a solid state drive (SSD) and the like. The auxiliary storage devices 23 and 33 store data used by the processors 21 and 31 for performing various types of information processing, or data generated by processing of the processors 21 and 31. The auxiliary storage devices 23 and 33 may also store the above-described application program.

The communication interfaces 24 and 34 are interfaces for data communication via the communication network 2. For example, well-known communication interfaces for performing data communication via the Internet can be used as the communication interfaces 24 and 34.

The bus 25 or 35 includes a bus line including an address bus, a data bus, and the like, and an interface circuit for connecting the respective units to the bus line. The bus 25 or 35 transmits data and signals exchanged between the respective units which are connected.

The web server 20 and the receipt server 30 use different application programs stored in the auxiliary storage devices 23 and 33. In addition, the web server 20 and the receipt server 30 have different usage of the auxiliary storage devices 23 and 33 at the time of information processing performed by the processors 21 and 31 based on the application programs.

One of the application programs stored in the auxiliary storage device 23 is a web server application 23a which is a program for information processing to be described below for generating payer-by-payer data.

A part of the storage area of the auxiliary storage device 23 is used as a sharing management area 23b. The sharing management area 23b is an area for performing data editing for generating payer-by-payer data.

One of the application programs stored in the auxiliary storage device 33 is a receipt server application 33a which is a program describing information processing for providing the electronic receipt service.

The auxiliary storage device 33 stores an electronic receipt database 33b and a sharing management database 33c which will be described below.

If a general-purpose server device is used as the web server 20 or the receipt server 30, the server device and the web server application 23a or the receipt server application 33a are individually provided to a user of the web server 20 or the receipt server 30. Under an operation of the user or a service person, the web server application 23a or the receipt server application 33a is written to the auxiliary storage devices 23 and 33 included in the server device. At this time, the web server application 23a or the receipt server application 33a is transferred to the web server 20 or the receipt server 30 via a removable recording medium such as a magnetic disk, a magneto-optical disk, an optical disk or a semiconductor memory, or is performed by communication via a network. However, the web server 20 or the receipt server 30 may be provided to the user in a state in which the web server application 23a or the receipt server application 33a is already written to the auxiliary storage devices 23 and 33.

Next, an operation of the sales data management system 1 as described above will be described. Contents of the processing to be described below are merely an example, and as long as the same results are obtained, replacing the sequence of a part of the processing or appropriately using other various types of processing can be performed.

In the following, a case is described in which a group including three persons, Mr. A, Mr. B, and Mr. C as illustrated in FIG. 1, eats food at a restaurant where the store system 10 is installed. It is assumed that Mr. A, Mr. B and Mr. C are each members of the electronic receipt service provided by the receipt server 30 and each member code is ID1, ID2, and ID3, respectively.

Each order of Mr. A, Mr. B, and Mr. C is heard by a store clerk of the restaurant and is input to the hand-held terminal 11 by operation of the store clerk.

By doing so, the hand-held terminal 11 generates order reception data in accordance with the above-described operation, and transmits the order reception data to the station 12 via the wireless access point 16 and the LAN 15.

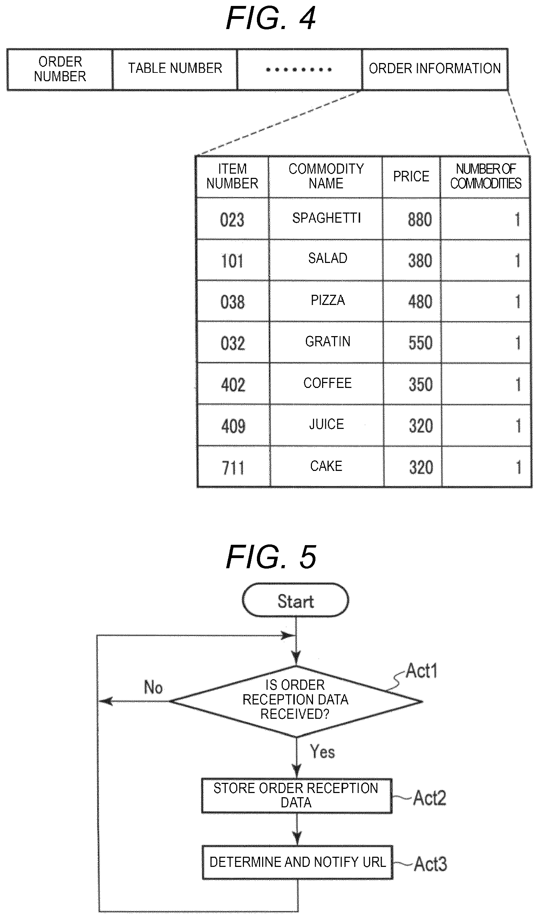

FIG. 4 is a diagram schematically illustrating an example of the order reception data.

As illustrated in FIG. 4, the order reception data includes management information such as an order number, a table number, and order information.

The order number is generated by the hand-held terminal 11 in order to individually identify handling of each of a plurality of customer groups. The order number may be generated by the station 12. The table number is given in advance to the table where the customer group sits, and is input by the store clerk. The management information may include arbitrary information such as order reception time.

The order information includes records for each ordered commodity. The record includes, for each ordered commodity, an item number, a commodity name, price, and the amount of commodities. The item number is predetermined in order to identify each commodity. The commodity name is a name of the corresponding commodity. The price is a unit price of the corresponding commodity. The amount of commodities is the number of orders for the corresponding commodity.

Here, it is assumed that Mr. A orders "salad" and "gratin", Mr. B orders "pizza" and "juice", and Mr. C orders "spaghetti", "coffee", and "cake." Accordingly, the order information includes record on each of the commodities. However, the order reception data does not include information for distinguishing who ordered each commodity.

Thus, the order information represents a transaction list which is a list of commodities corresponding to a plurality of items which are a target of one transaction which is not settled.

The station 12 receives the order reception data if the order reception data is transmitted by the LAN 15. The station 12 stores the order reception data in an embedded storage device or an externally attached storage device. The station 12 controls the printer 13 so as to print an order slip based on the order reception data. The order slip represents the contents of the order so that a customer can confirm the order slip, and is handed to the customer at the store before the customer performs settlement. The hand-held terminal 11 may transmit an item code of the commodity to the station 12 each time an operation for inputting the ordered commodity is performed. The station 12 may generate the order reception data described above.

The above-described processing may be the same processing that is performed in the existing same type of store system. However, in the present embodiment, the station 12 performs the following processing in addition to the above processing.

If the order reception data is received, the station 12 transmits the order reception data to the web server 20 via the communication network 2 prior to printing the order slip. At this time, the station 12 includes a store code in the order reception data instead of the table number. The store code is predetermined identification information for identifying a restaurant where the station 12 is installed. If the web server 20 processes only order reception data transmitted from one restaurant, the store code may not be included in the order reception data. In addition, if it is determined that the order number does not overlap between different restaurants, the store code may not be included in the order reception data. If a uniform resource locator (URL) is transmitted from the web server 20 (as will be described below), the station 12 receives the URL. The station 12 controls the printer 13 so that a two-dimensional code corresponding to the URL is additionally represented in the above-described order slip. Instead of the two-dimensional code, another code symbol such as a bar code may be used.

FIG. 5 is a flowchart illustrating a sequence of information processing performed by the processor 21 of the web server 20. When the web server 20 is in a normal operation state, the processor 21 constantly performs the information processing illustrated in FIG. 5, based on the web server application 23a.

In Act 1, the processor 21 waits for receipt of the order reception data.

If the order reception data transmitted from the station 12 is transmitted to the web server 20 through the communication network 2 as described above, the communication interface 24 receives the order reception data. In response to the start of such reception, the processor 21 determines that the answer to Act 1 is Yes, and proceeds to Act 2.

In Act 2, the processor 21 stores the order reception data received by the communication interface 24 in the sharing management area 23b.

In Act 3, the processor 21 determines the URL associated with the order reception data stored in Act 2. The processor 21 notifies the station 12 that is a transmission source of the received order reception data of the URL via the communication network 4. The URL corresponds to the two-dimensional code printed on the above-described order slip.

Thereafter, the processor 21 returns to Act 1, and next, waits for receipt of order reception data.

Meanwhile, it is assumed that a designated payer of one of Mr. A, Mr. B, and Mr. C receives the money to be paid from the other persons and thereafter the designated payer settles. In this case, it is assumed that each of Mr. A, Mr. B, and Mr. C wish to confirm his/her payment afterwards by using the electronic receipt service. In this case, each of Mr. A, Mr. B, and Mr. C controls the information terminal 3 to read the two-dimensional code printed on the order slip. Each person operates the information terminal 3 so as to access the URL set in the two-dimensional code. In accordance with the operation, the information terminal 3 accesses the web server 20 via the URL. In order for information terminal 3 to access the web server 20, an application that reads the two-dimensional code and a well-known function that is realized by cooperation with a web browser can be used. Alternatively, the above-described access may be realized by incorporating a function of reading the two-dimensional code and a function of the web browser into the application of the information terminal 3 for using the electronic receipt service.

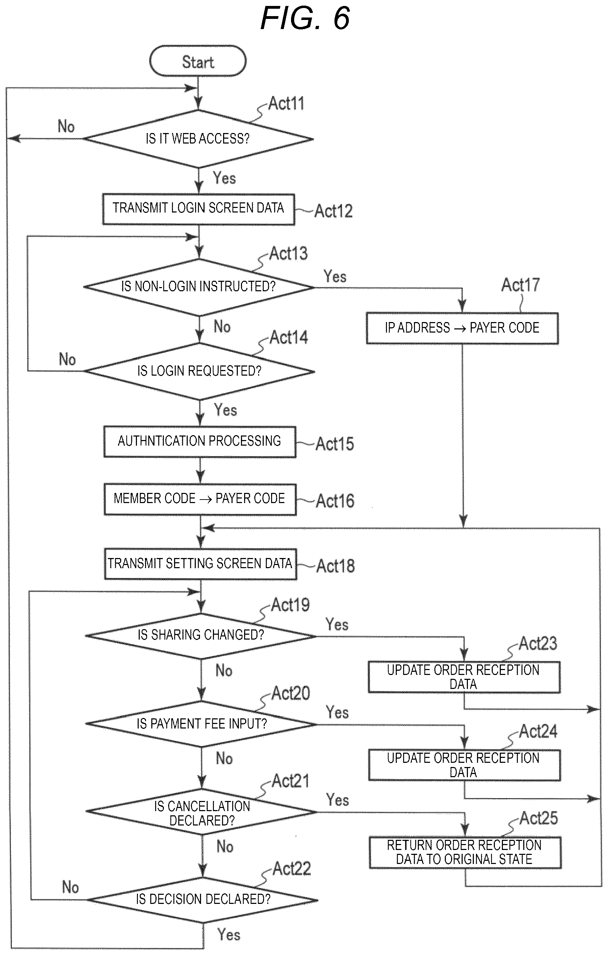

FIG. 6 is a flowchart illustrating a sequence of information processing performed by the processor 21 of the web server 20. When the web server 20 is in a normal operation state, the processor 21 constantly performs the information processing separately from the processing illustrated in FIG. 5, based on the web server application 23a.

In Act 11, the processor 21 waits for web access from the information terminal 3 to be made, for example when the information terminal accesses the web server 20 via the URL set in the two dimensional code. If the web access from the information terminal 3 is made as described above, the processor 21 determines that an answer is Yes and proceeds to Act 12.

In Act 12, the processor 21 transmits login screen data for displaying a login screen to the information terminal 3 via the communication network 2. The login screen is a screen for allowing an operator of the information terminal 3 to input authentication information for member authentication. It is assumed that the login screen also receives an operation for an operator of the information terminal 3 to declare that it is not logged in.

If the login screen is displayed on the information terminal 3, the operator of the information terminal 3 inputs the authentication information. Typically, the operator inputs a member code assigned to himself/herself and a predetermined password. Then, the information terminal 3 requests the web server 20 to perform log-in processing in accordance with the authentication information which is input. In addition, the operator of the information terminal 3 performs an operation for declaring that log-in is not made, if it is desired to perform an operation to be described below without logging in. Then, the information terminal 3 instructs the web server 20 not to log-in.

In Act 13, the processor 21 confirms whether or not non-login is instructed. If the non-login is not instructed, the processor 21 determines that an answer is No, and proceeds to Act 14.

In Act 14, the processor 21 confirms whether or not log-in is requested. If the log-in is not requested, the processor 21 determines that an answer is No, and returns to Act 13.

Thus, the processor 21 waits for non-log-in to be instructed or log-in to be requested in Act 13 and Act 14. If the log-in is requested, the processor 21 determines that an answer is Yes in Act 14 and proceeds to Act 15.

In Act 15, the processor 21 performs authentication processing using authentication information provided at the time of log-in request. The authentication processing may be a well-known processing. If the authentication is successful, the processor 21 proceeds to Act 16. Illustration of processing when the authentication fails is omitted. For example, after the processor 21 notifies the information terminal 3 of an authentication error, the processor returns to Act 11 or Act 12.

In Act 16, the processor 21 sets a member code included in the authentication information as a payer code.

Meanwhile, if non-login is instructed from the information terminal, the processor 21 determines that an answer is Yes in Act 13, and proceeds to Act 17.

In Act 17, the processor 21 sets an IP address of the information terminal 3 as the payer code. Here, arbitrary information that can temporarily identify the information terminal 3 can be used instead of the IP address.

The processor 21 ends setting the payer code in Act 16 or Act 17, and the processor 21 proceeds to Act 18 in any case.

In Act 18, the processor 21 transmits setting screen data for display of the setting screen to the information terminal 3 via the communication network 2. The setting screen is a screen for allowing an operator to select the commodity for which the operator of the information terminal 3 pays money from among the commodities indicated in one piece of order reception data which is an editing target. Among the order reception data stored in the sharing management area 23b, the processor 21 selects an editing target associated with the URL used for access from the information terminal 3.

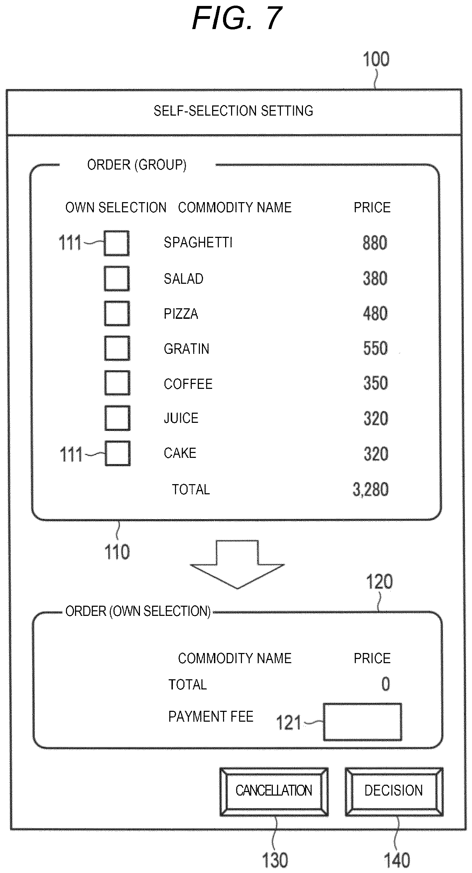

FIG. 7 is a diagram illustrating an example setting screen 100.

The setting screen 100 is generated by the processor 21, based on the order reception data illustrated in FIG. 4. The setting screen 100 includes display sections 110 and 120 and buttons 130 and 140.

The display section 110 illustrates a list of commodities indicated in the order reception data of the editing target, and check boxes 111 are arranged next to names of the respective commodities.

The display section 120 illustrates a list of commodities designated by an operator of the information terminal 3 displaying the setting screen 100 and the sum of money of the commodities. However, in the initial setting screen 100 illustrated in FIG. 7, no commodity is designated, and thus, information of the commodity is not illustrated and the total is also set to "0" in FIG. 7. The display section 120 further includes an input section 121. The input section 121 is for inputting an arbitrary amount of money paid by the operator of the information terminal 3.

The button 130 is for the operator to declare that the setting operation performed via the setting screen 100 is canceled.

The button 140 is for the operator to declare that setting by a setting operation performed via the setting screen 100 is decided.

In Act 19, the processor 21 confirms whether or not a sharing change is made on the setting screen being displayed on the information terminal 3. If the sharing change is not made, the processor 21 determines that an answer is No, and proceeds to Act 20.

In Act 20, the processor 21 confirms whether or not a payment fee is input on the setting screen being displayed on the information terminal 3. If the payment fee is not input, the processor 21 determines that an answer is No, and proceeds to Act 21.

In Act 21, the processor 21 confirms whether or not a cancellation declaration is made on the setting screen being displayed on the information terminal 3. If the cancellation declaration is not made, the processor 21 determines that an answer is No, and proceeds to Act 22.

In Act 22, the processor 21 confirms whether or not a decision declaration is made on the setting screen being displayed on the information terminal 3. If the decision declaration is not made, the processor 21 determines that an answer is No, and returns to Act 19.

Thus, in Act 19 to Act 22, the processor 21 waits for any one of the sharing change, an input of the payment fee, the cancellation declaration, and the decision declaration.

The operator of the information terminal 3 selects a commodity that the operator pays for from the list of commodities illustrated in the display section 110 of the setting screen 100, and operates the information terminal 3 so that a check is an input to the check box associated with the commodity.

For example, Mr. A first operates the information terminal 3 so that a check is an input to the check box associated with "salad" and "gratin". By doing so, the operation results are transmitted from the information terminal 3 to the web server 20. If the notification is received, the processor 21 determines that sharing is changed and an answer is Yes in Act 19, and proceeds to Act 23.

In Act 23, the processor 21 updates the order reception data of the editing target.

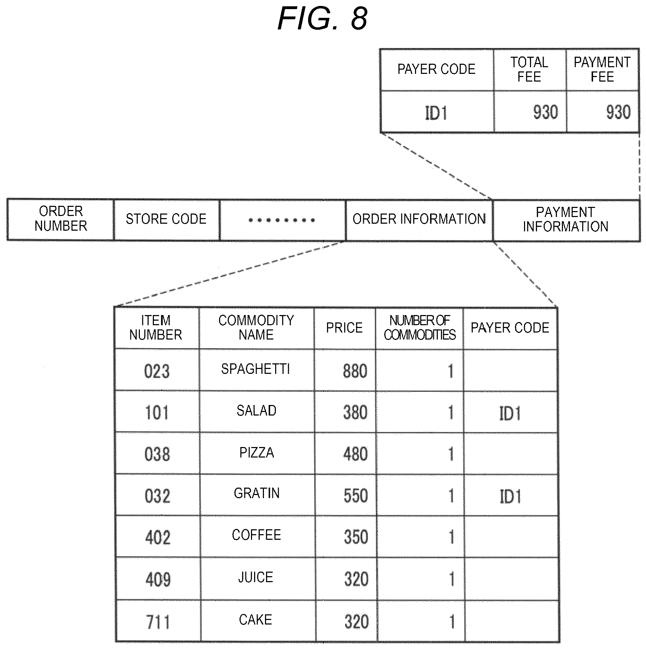

FIG. 8 is a diagram schematically illustrating the updated order reception data.

If a field of a payer code is not added to each record in the order information, the processor 21 adds the field. In addition, the processor 21 adds the payer code in the field of the payer code added to the record relating to the commodity to which the check box corresponding to the check input is associated. Here, since the operator is Mr. A, the member code of Mr. A is set in the payer code. Accordingly, "ID1"s are added in the field of the payer code associated with "salad" and "gratin", respectively, as illustrated in FIG. 8. Thus, the processor 21 determines the member identified by the member code "ID1" as the payer for "salad" and "gratin" which are items in a target transaction. That is, the processor 21 performs the information processing based on the web server application 23a, and thereby, the processor 21 functions as a determination unit. The web server 20 is an example of a first information processing device including the determination unit.

The processor 21 also adds payment information to the order reception data.

The payment information includes the payer code, a total fee, and a payment fee associated with each other. The payer code is described in the field of the payer code of the order information. The total fee is the sum of prices of the commodities in the order information to which the payer code is associated in the order information. The payment fee is paid by a customer identified by the payer code associated thereto. The processor 21 describes the total fee "930," which includes "380," which is the price of "salad" and "550," which is the price of "gratin". When the payment fee is not input to the input section 121, the processor 21 sets the total fee as the payment fee as it is.

If updating the order reception data ends in the Act 23, the processor 21 repeats the processing after Act 18. That is, the processor 21 updates the display on the information terminal 3 to the setting screen according to the updated order reception data, and then, returns to a wait state of Act 19 to Act 22.

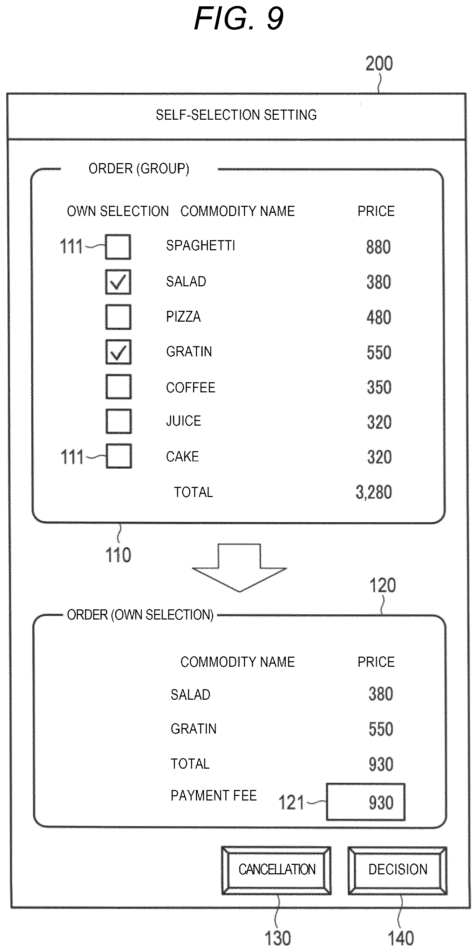

FIG. 9 is a diagram illustrating the setting screen 200 as an example. In the elements illustrated in FIG. 9, the same symbols or reference numerals will be attached to the same elements as those illustrated in FIG. 7.

The setting screen 200 is generated by the processor 21, based on the order reception data illustrated in FIG. 8. In the setting screen 200, display information inside the display sections 110 and 220 are different from those of the setting screen 100.

In addition to the display information on the setting screen 100, the display section 110 illustrates check marks in check boxes 111 associated with "salad" and "gratin" .

In addition to the display information in the display section 120, the display section 120 illustrates character strings "salad", "380", "gratin", "550", "930", and "930". The character strings "salad" "380" "gratin", and "550" are commodity names and money represented in the record including the field of the payer code that includes the member ID of Mr. A, among records of the order reception data that is the editing target. In addition, the character strings "930" and "930" are a total fee and a payment fee included in the payment information in association with a member ID of Mr. A.

An operator of the information terminal 3 operates the information terminal 3 to input money to the input section 121, if money different from the total fee of a designated commodity is paid. By doing so, the operation results are notified from the information terminal 3 to the web server 20. If the notification is received, the processor 21 determines that an answer is Yes in Act 20, and proceeds to Act 24.

In Act 24, the processor 21 updates the order reception data of an editing target such that the payment fee of the payment information is changed to the money input to the input section 121. Specifically, if Mr. A inputs "1,000" in the input section 121, the payment fee of the payment information is rewritten to "1,000". If the money is input to the input section 121 before Act 23 is performed, the processor 21 adds the payment information in which the total fee is set as "0" and the payment fee is set as "1,000" to the order reception data in Act 24. Thereafter, the processor 21 repeats the processing after Act 18. That is, the processor 21 updates the display on the information terminal 3 to the setting screen according to the updated order reception data, and returns to the wait state of Act 19 to Act 22.

An operator of the information terminal 3 operates the information terminal 3 such that the button 130 is pressed, if the operator wishes to cancel the designation of commodity and the input of payment fee performed so far. By doing so, the operation results are transmitted from the information terminal 3 to the web server 20. If the transmission is received, the processor 21 determines that an answer is Yes in Act 21, and proceeds to Act 25.

In Act 25, the processor 21 returns the order reception data to a state before updating in Act 23 and Act 24. Accordingly, the processor 21 may restore the order reception data before any editing, or may restore only the initial information relating to the changed information. Thereafter, the processor 21 repeats the processing after Act 18. That is, the processor 21 updates the display on the information terminal 3 to the initial setting screen illustrated in, for example, FIG. 7, and thereafter, returns to the wait state of Act 19 to Act 22.

The operator of the information terminal 3 operates the information terminal 3 such that the button 140 is pressed, if setting of sharing conditions of the operator is ended with respect to designation of the commodities and input of the payment fee which are performed so far. The operation results are transmitted from the information terminal 3 to the web server 20. If the transmission is received, the processor 21 determines that an answer is Yes in Act 22, and returns to the wait state of Act 11. Thus, it is decided that the order reception data stored in the auxiliary storage device 23 is valid at this point of time.

Meanwhile, if Mr. B accesses the web server 20 by using the information terminal 3 subsequent to Mr. A, the processor 21 performs the processing illustrated in FIG. 6 in the same manner as described above. At this time, since Mr. B is logged in, the processor 21 sets "ID2" of the member code of Mr. B as a payer code in Act 16. In accordance with designation of commodity performed by Mr. B, the processor 21 includes "ID2" in the order reception data in association with the commodity designated in Act 23. In addition, when Act 23 or Act 24 is executed for the first time, the processor 21 adds a record in which "ID2" is described as the payer code, in the payment information.

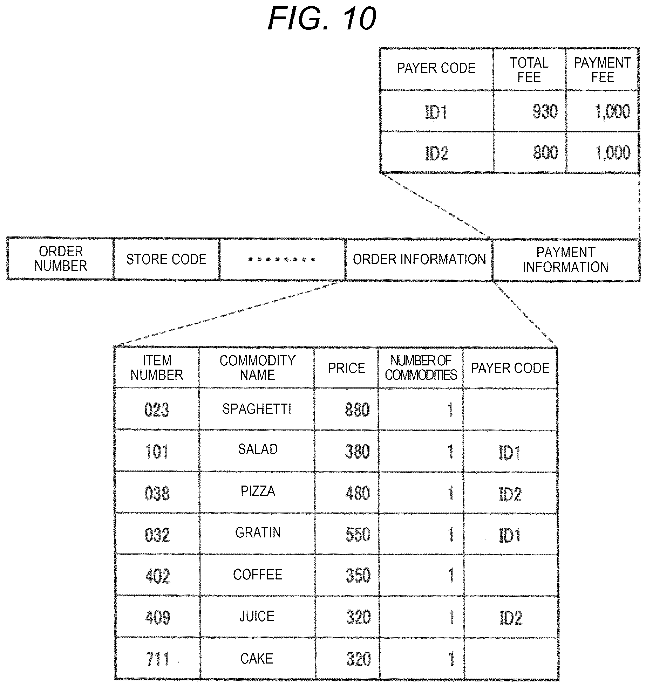

FIG. 10 is a diagram illustrating the order reception data after the order reception data illustrated in FIG. 8 is updated according to an instruction from Mr. B.

FIG. 10 illustrates a case where Mr. B designates "pizza" and "juice" and inputs "1,000" as a payment fee. Accordingly, "ID2"s are described in association with a commodity names "pizza" and "juice", respectively. In addition, the payment information includes "800," which is the sum of "480" and "320" which are respectively prices of "pizza" and "juice," and the payment fee "1,000" which is input are associated with "ID2."

Subsequently, if Mr. C accesses the web server 20 by using the information terminal 3, the processor 21 also performs the processing illustrated in FIG. 6 in the same manner as described above. This case is the same as the case of the access made by Mr. B, but it is assumed that the processor 21 distinguishably displays a commodity previously designated by another person, a commodity not designated yet, and a commodity designated by a current operator, on the setting screen displayed in Act 18.

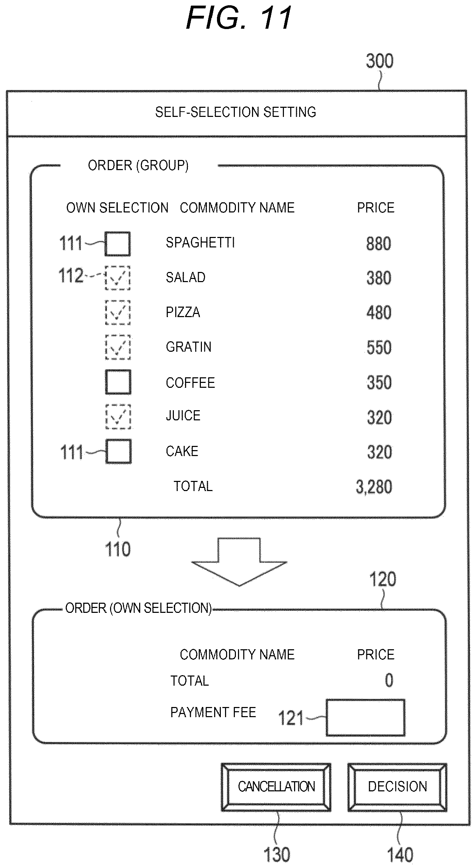

FIG. 11 is a diagram illustrating a first setting screen 300 displayed on the information terminal 3 of Mr. C, when the order reception data is in a state illustrated in FIG. 10. The same reference numerals or symbols are attached to the same elements as those illustrated in FIG. 7 among the elements illustrated in FIG. 11.

Elements already designated by other persons are distinguished by denoting check boxes 112 and check marks associated with commodity names of the commodities previously designated by other persons by using dashed lines, or other manner indicating that such checkboxes 112 cannot be selected, in the display section 110 on the setting screen 300.

In addition, the processor 21 sets the payment fee relating to an operator of the information terminal 3 to the money obtained by subtracting the sum of the payment fees of other persons indicated in the payment information from the total fee of the commodity indicated in the order information in Act 23 of FIG. 6 which is performed in accordance with designation of the last undesignated commodity.

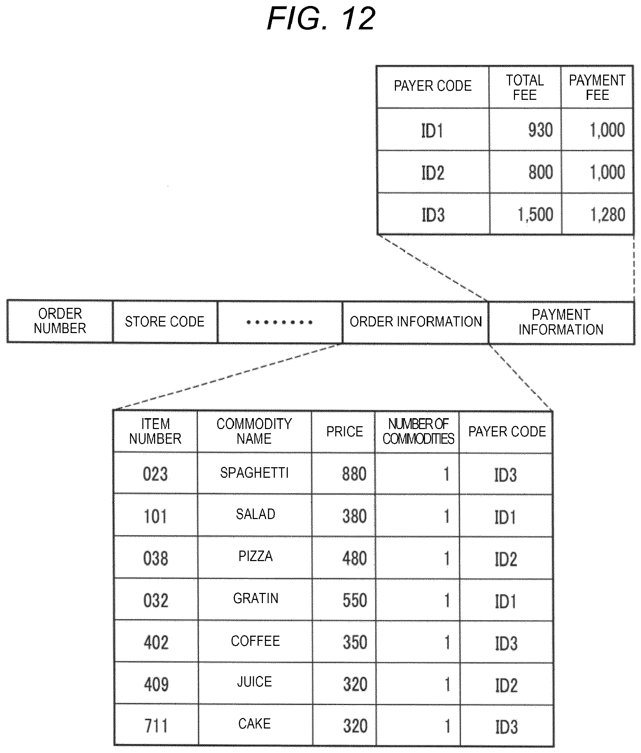

FIG. 12 is a diagram illustrating order reception data after the order reception data illustrated in FIG. 10 according to an instruction of Mr. C.

FIG. 12 illustrates a state where Mr. C designates "spaghetti", "coffee", and "cake" and does not input the payment fee. Accordingly, "ID3s" are described in association with the commodity names "spaghetti", "coffee", and "cake", respectively. In addition, a record including the payer code "ID3" is added to the payment information. Since the payer code is indicated for each of the commodities indicated in the order information, the payment fee of the payment information is not "1,550" corresponding to the total fee but is "1,280." This payment fee amount is obtained by subtracting the sum "2,000" of the payment fees "1,000" and "1,000" of other persons indicated in the payment information from "3,280" which is the total fee of the commodities indicated in the order information.

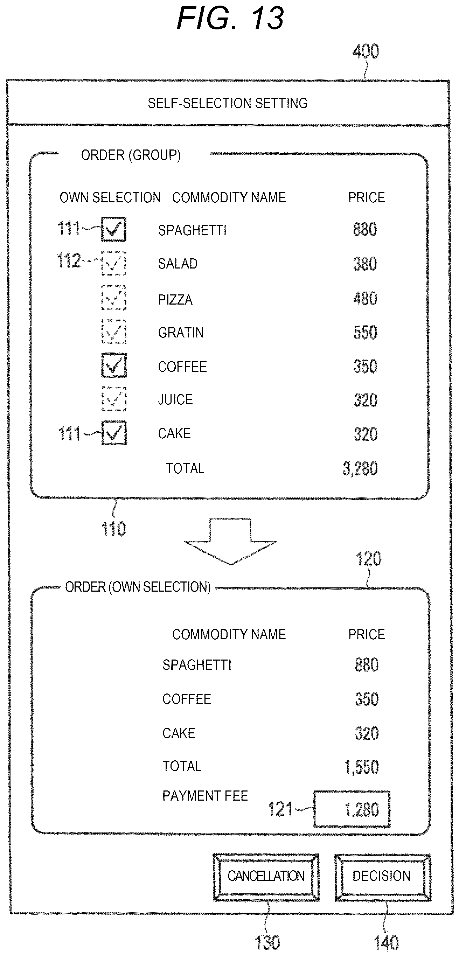

FIG. 13 is a diagram illustrating a setting screen 400 displayed on the information terminal 3 of Mr. C, when the order reception data is in a state illustrated in FIG. 12. The same reference numerals or symbols are attached to the same elements as those illustrated in FIG. 7, among the elements illustrated in FIG. 9.

As illustrated in FIG. 13, the payment fee determined regardless of intention of Mr. C as described above is displayed in the input section 121. In this state, the processor 21 causes the information terminal 3 not to receive an input of the payment fee to the input section 121, or the processor 21 does not update the order reception data in Act 24 of FIG. 6 according to the input of the payment fee to the input section 121. However, it is also possible that the payment fee is not adopted as the payment fee in the settlement to be described below and the total of the payment fees of all the payers is different from the money of all the commodities indicated in the order information. In this case, the processor 21 may perform Act 24 of FIG. 6 by validating the input of the payment fee in the input section 121 illustrated in FIG. 13.

When leaving the restaurant, one representative of Mr. A, Mr. B, and Mr. C receives payment fee from the other persons, and thereafter, the representative holds an order slip, moves to a checkout counter, and requests accounting to a store clerk. The store clerk operates the POS terminal 14 to collectively settle money for food of a group including Mr. A, Mr. B, and Mr. C, based on the order reception data stored in the station 12. If the settlement is completed, the POS terminal 14 transmits settlement data relating to the settlement to the station 12. The settlement data displays, for example, an applied settlement method, date and time when the settlement is completed, and the like. The settlement data includes deposit money, change money, and the like, for example, if cash settlement is applied. The station 12 stores the order reception data that is a target of settlement and the transmitted settlement data in a storage device as transaction data associated with each other. Such processing is the same as the processing performed in a store system of the existing same type. In addition, operations of the station 12 and the POS terminal 14 may be basically the same as the operations performed by the existing station and the existing POS terminal. However, when the settlement is completed, the station 12 transmits the settlement notice together with notification of a store code and an order number to the web server 20.

If the representative desires to use the electronic receipt service, the station 12 requests the receipt server 30 to register a receipt. When there is a request, the station 12 transmits the transaction data and a member ID of a representative to the receipt server 30. Information processing in the station 12 for the request may be the same as the processing performed in the existing station 12 according to the electronic receipt service. This request may be made by the POS terminal 14 via the station 12 and the communication network 2. Alternatively, the POS terminal 14 may perform communication via the communication network 2 without passing through the station 12, and the POS terminal 14 may directly make a request to the receipt server 30 via the communication network 2.

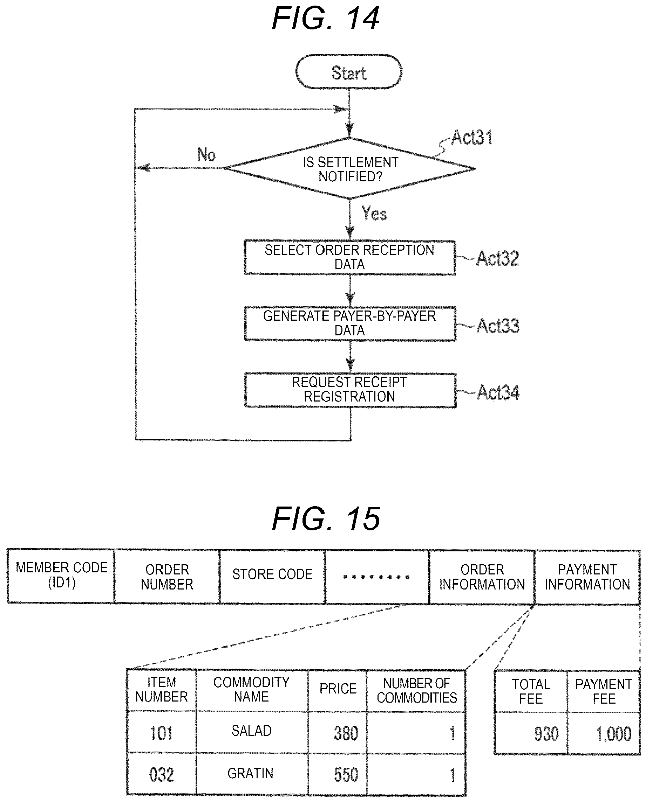

FIG. 14 is a flowchart illustrating a sequence of information processing performed by the processor 21 in the web server 20. When the web server 20 is in a normal operation state, the processor 21 constantly performs the information processing separately from the processing illustrated in FIGS. 5 and 6, based on the web server application 23a.

In Act 31, the processor 21 waits for a settlement notice to be received.

If the settlement notice is received from the station 12 as described above, the processor 21 determines that an answer is Yes in Act 31, and proceeds to Act 32.

In Act 32, the processor 21 selects an order reception data corresponding to a store code and an order number included with the settlement notification, from among the order reception data stored in the sharing management area 23b. Hereinafter, the order reception data selected here will be referred to as selected order reception data.

In Act 33, the processor 21 generates payer-by-payer data, based on the selected order reception data. The processor 21 generates one piece of payer-by-payer data for each member code included in the selected order reception data as a payer code.

FIG. 15 is a diagram illustrating one piece of payer-by-payer data.

The payer-by-payer data illustrated in FIG. 15 is generated for the member code "ID1" from the order reception data illustrated in FIG. 12.

The payer-by-payer data is obtained by associating management information such as an order number and a store code included in the selected reception order data as order information and payment information for one member code.

Specifically, the processor 21 generates payer-by-payer data illustrated in FIG. 15 from the order reception data illustrated in FIG. 12 as follows.

The processor 21 acquires "ID1" as one of the member codes described as the payer code in the selected order reception data. The processor 21 extracts a record including the member code "ID1" as the payer code, from the order information included in the selected order reception data. The processor 21 generates new order information as a set of records in which the payer code is omitted from each of the extracted records. That is, the processor 21 extracts each record that is included in the payment information included in the selected order reception data and that includes the member code "ID1" as the payer code. The processor 21 generates new payment information as information obtained by omitting the payer code from the extracted record. The processor generates payer-by-payer data relating to the member code "ID1" as data in which various management information -such as the order number, the store code included in the selected order reception data, the newly generated order information and payment information-are associated with the member code "ID1".

The processor 21 also generates payer-by-payer data for the member codes "ID2" and "ID3" in the same manner.

Thus, the order information of the payer-by-payer data indicates a payer-by-payer list that is a list of commodities as items for which the same payer has paid for.

In Act 34, the processor 21 requests receipt registration to the receipt server 30 via the communication network 4 in accordance with transmission of all the payer-by-payer data generated as described above. Specifically, the processor 21 causes registration request information including all of the payer-by-payer data to be sent from the communication interface 24 to the receipt server 30. Thus, as the processor 21 performs information processing based on the web server application 23a, a function as a transmission unit is realized by an operation of the communication interface 24 under the control of the processor 21. Thereafter, the processor 21 returns to Act 31 and waits for a next settlement notice.

If a receipt registration request is made from the web server 20 or from the station 12 as described above, the communication interface 34 of the receipt server 30 receives the registration request information. Thus, the communication interface 34 functions as a reception unit.

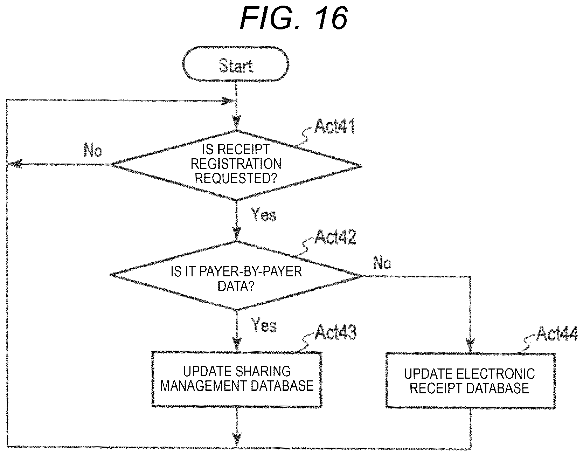

FIG. 16 is a flowchart illustrating a sequence of information processing performed by the processor 31 of the receipt server 30. When the receipt server 30 is in a normal operation state, the processor 31 constantly performs the information processing based on the receipt server application 33a.

In Act 41, the processor 31 waits for receipt registration request. If the communication interface 34 receives the registration request information as described above, the processor determined that an answer is Yes, and proceeds to Act 42.

In Act 42, the processor 31 confirms whether or not the payer-by-payer data is included in the request. If the request is made by the web server 20 and payer-by-payer data is included, the processor determines that an answer is Yes and proceeds to Act 43.

In Act 43, the processor 31 updates the sharing management database 33c so as to reflect the information indicated in the included payer-by-payer data. That is, the sharing management database 33c stores the information indicated in the payer-by-payer data. The order information of the payer-by-payer data indicates a payer-by-payer list which is a list of commodities that the same payer pays for. Thus, an area where the sharing management database 33c of the auxiliary storage device 33 is stored functions as a first storage device. The processor 31 performs the information processing based on the receipt server application 33a, and thereby, a computer having the processor 31 functions as a first storage control unit.

Meanwhile, if the receipt registration request is made by the station 12 and the payer-by-payer data is not notified, the processor 31 determines that an answer is No in Act 42 and proceeds to Act 44. That is, if there is a request from the station 12 and transaction data and a member ID are included, the processor 31 proceeds to Act 44.

In Act 44, the processor 31 updates the electronic receipt database 33b so as to have information indicated in the included transaction data as electronic receipt information relating to the included member ID. That is, the electronic receipt database 33b stores information to be represented as a receipt for each transaction like transaction content and settlement status. Here, the transaction data includes a list of ordered commodities for a group as described above. That is, the transaction data indicates a transaction list which is a list of commodities which were a target of one transaction. Thus, an area where the electronic receipt database 33b of the auxiliary storage device 33 is stored functions as a second storage device that stores the transaction list in association with a member ID that identifies a settlement person. As the processor 31 performs information processing based on the receipt server application 33a, a computer having the processor 31 functions as a second storage control unit.

If updating is completed in Act 43 or Act 44, the processor 31 returns to a wait state of Act 41 and waits for a next receipt registration request to be made.

In accordance with a request of a member from the information terminal 3 or an arbitrary information terminal, the processor 31 generates electronic receipt data representing the past transaction content and settlement status, based on the electronic receipt database 33b. The processor 31 causes the electronic receipt data to be transmitted from the communication interface 34 to the requesting information terminal. This may be, for example, the same processing as processing realized by a processor included in an existing receipt server so as to provide a well-known electronic receipt service. The processor 31 includes at least a transaction list which includes commodities as a plurality of items corresponding to one transaction, in the electronic receipt data. Thus, as the processor 31 performs information processing based on the receipt server application 33a, a function of a second output unit is realized by an operation of the communication interface 34 under the control of the processor 31.

In addition, the processor 31 generates payment status data representing payment status of a member relating to the past payment sharing, based on the sharing management database 33c, in accordance with a request of the member from the information terminal 3 or an arbitrary information terminal. The processor 31 caused the payment status data to be transmitted from a communication interface 34 to the requesting information terminal. The processor 31 includes at least the list of commodities which the member has paid for, in the payment status data. As the processor 31 performs information processing based on the receipt server application 33a, a function of a first output unit is realized by an operation of the communication interface 34 under the control of the processor 31. The receipt server 30 is an example of a second information processing device including the first storage control unit and the first output unit.

As described above, according to the sales data management system 1, a member can confirm afterwards what type of payment the member made with respect to the transaction collectively settled by a group having a plurality of payers, by using the electronic receipt service, based on the payment status data.

In addition, according to the sales data management system 1, the receipt server 30 distinguishably manages content and the settlement status relating to the transaction, and the payment status relating to payment sharing, by using the electronic receipt database 33b and the sharing management database 33c. Accordingly, it is possible to clearly distinguish between electronic receipt data that can be used as proof of payment and payment status data that cannot be used as the proof of payment.

In addition, according to the sales data management system 1, even if commodities for which one payer pays money is not specified, a payment fee different from the total fee of the prices of the commodities can be set. Thereby, if a plurality of payers adjust the payment fee based on, for example, a fraction or the like, it is possible for the member to confirm the status later.

In addition, according to the sales data management system 1, it is possible for a non-member to designate payment sharing of commodities by using an IP address as the payer code. Accordingly, even if a payer who is not a member is included, each payer for each commodity can become clear, and the payment sharing of commodities can be designated appropriately and easily. That is, if only the member can designate the payment sharing of commodities, in a case where a non-member payer is included, a payer is not specified to the end with respect to the commodity for which the non-member payer pays money. Under such circumstances, there is a possibility that designation of the commodity may be omitted and accuracy decreases, and since a member has to carefully designate the payment sharing so as to prevent the designation from being omitted, work thereof becomes cumbersome. In contrast to this, according to the sales data management system 1, if there is an undesignated commodity after all payers have designated the payment sharing, it turns out that designation of the commodity is omitted. In this case, if one of the payers designates again the commodity, a state of the payment sharing can be managed without the designation omission.

In this embodiment, the following various modifications can be made.

A list of arbitrary items other than commodities provided by the restaurant may become a processing target. The items are not limited to tangible objects such as commodities, and may be intangible things such as service.

If the payer-by-payer data is allowed to be handled similarly to transaction data, the processor 31 may generate electronic receipt data based on payer data and may transmit the electronic receipt data to a requesting information terminal. In this case, the electronic receipt database 33b and the sharing management database 33c may be integrated.

The functions of the web server 20 and the receipt server 30 may be realized in a single server device.

The electronic receipt database 33b and the sharing management database 33c may be provided in separate storage devices. At least one of the electronic receipt database 33b and the sharing management database 33c may be provided in a storage device externally attached to the receipt server 30.

A part of the aforementioned information processing performed by the processor 21 and the processor 31 may be omitted. For example, the processor 21 may not perform Act 13 and Act 17, and may update the order reception data in accordance with an instruction of only a member.

The URL for accessing the web server 20 may be provided to a customer in an arbitrary form different from the above-described embodiment. For example, a slip representing a two-dimensional code may be printed out separately from an order slip. In addition, a two-dimensional code may be displayed on a display device of a table terminal attached to a table of a restaurant. In addition, the URL may be provided to the information terminal 3 by wireless communication from an antenna, a tag or the like provided on a table or the like by using the Wi-Fi, the Bluetooth (registered trademark), near field communication (NFC) or the like.

Each function realized by the processor 21 and the processor 31 by using control processing can also be realized partially or entirely by hardware which performs information processing based on a logic circuit or the like. In addition, each of the above-described functions can also be realized by combining software control with hardware such as the above-described logic circuit.

While certain embodiments have been described, these embodiments have been presented by way of example only, and are not intended to limit the scope of the inventions. Indeed, the novel methods and systems described herein may be embodied in a variety of other forms; furthermore, various omissions, substitutions and changes in the form of the methods and systems described herein may be made without departing from the scope of the inventions. The accompanying claims and their equivalents are intended to cover such forms or modifications as would fall within the scope of the inventions.

## Claims

1. A hand-held electronic receipt generating terminal in communication with a first server that is in communication with a second server, comprising:
a display device;
a wireless communication interface; and
a processor programmed to generate a sequence of graphical user interfaces (GUIs) for display by the display device, based on data transmitted to the first server through the wireless communication interface and data received from the first server through the wireless communication interface, which is generated by the first server based on data exchanged between first and second servers,
wherein the data transmitted to the first server includes first data generated based on inputs made to a first GUI, which is a login GUI, and second data generated based on inputs made to a second GUI containing a list of selectable objects, and
wherein an electronic receipt is generated by the first server for storage at the second server based on the second data.

2. A server for managing transaction data, comprising:
a storage device that stores a plurality of order reception data records, each order reception data record corresponding to one or more items in a single transaction;
a communication interface; and
a processor configured to:
receive, via the communication interface from a requesting terminal, a request to designate a specific payer of at least one item out of the one or more items in one single transaction,
in response to the request, transmit, via the communication interface to the requesting terminal, setting screen data for displaying a setting screen that accepts a designation input of the user of the requesting terminal as a payer for any designated one of the one or more items in the single transaction that have not been designated,
receive payer designation information corresponding to the designation input,
receive payment information indicating settlement of the single transaction,
update the order reception data record corresponding to the one single transaction based on the payer designation information to indicate the user as the payer for the designated item and based on the payment information, and
transmit, via the communication interface to a receipt server, the updated order reception data record.

3. The server according to claim 2, wherein the processor is further configured to:
generate and store in the storage device a payer data record corresponding to each designated payer that indicates each one of the one or more items in the single transaction designated by the corresponding designated payer but does not include items in the single transaction not designated by that designated payer, and
transmit, via the communication interface to the receipt server, the generated payer data record.

4. The server according to claim 2 or 3, wherein the setting screen includes a list of each of the one or more items in the single transaction.

5. The server according to any one of claims 2 to 4, wherein the setting screen includes a total amount due for each one of the one or more items in the single transaction designated by the corresponding designated payer.

6. The server according to any one of claims 2 to 5, wherein the processor is further configured to:
generate and transmit, via the communication interface to the requesting terminal, log-in screen data for displaying a log-in screen that accepts log-in input from the user of the requesting terminal,
determine whether the user of the requesting terminal is a registered user based on whether proper log-in input is received.

7. The server according to claim 6, wherein, if the user of the requesting terminal is determined to be a registered user, the processor uses an existing payer identification corresponding to the user of the requesting terminal to update the order reception data record.

8. The server according to claim 7, wherein, if the user of the requesting terminal is determined not to be the registered user, the processor assigns an arbitrary payer identification as corresponding to the user of the requesting terminal to update the order reception data record.

9. A method of managing transaction data comprising:
storing a plurality of order reception data records, each order reception data record corresponding to one or more items in a single transaction;
receiving, from a requesting terminal, a request to designate a specific payer of at least one item out of the one or more items in one single transaction;
in response to the request, transmitting, to the requesting terminal, setting screen data for displaying a setting screen that accepts a designation input of the user of the requesting terminal as a payer for any designated one of the one or more items in the single transaction that have not been designated;
receiving payer designation information corresponding to the designation input;
receiving payment information indicating settlement of the single transaction;
updating the order reception data record corresponding to the one single transaction based on the payer designation information to indicate the user as the payer for the designated item and based on the payment information; and
transmitting, to a receipt server, the updated order reception data record.

10. The method according to claim 9, further comprising:
generating information for displaying access information that indicates the receiving destination of the request; and
providing the access information to the requesting terminal, wherein the requesting terminal transmits the request based on the provided access information.

11. The method according to claim 10, wherein providing the access information includes providing a code indicating a URL of a server on a slip provided to the user or on a display device positioned near the user.

12. The method according to any one of claims 9 to 11, further comprising:
generating and storing a payer data record corresponding to each designated payer that indicates each one of the one or more items in the single transaction designated by the corresponding designated payer but does not include items in the single transaction not designated by that designated payer; and
transmitting, to the receipt server, the generated payer data record.

13. The method according to any one of claims 9 to 12, wherein the setting screen includes a list of each of the one or more items in the single transaction.

14. The method according to any one of claims 9 to 13, further comprising:
generating and transmitting, to the requesting terminal, log-in screen data for displaying a log-in screen that accepts log-in input from the user of the requesting terminal; and
determining whether the user of the requesting terminal is a registered user based on whether proper log-in input is received.

15. The method according to claim 14, wherein
if the user of the requesting terminal is determined to be a registered user, the processor uses an existing payer identification corresponding to the user of the requesting terminal to update the order reception data record, and
if the user of the requesting terminal is determined not to be the registered user, the processor assigns an arbitrary payer identification as corresponding to the user of the requesting terminal to update the order reception data record.
